Europäisches Patentamt

European Patent Office

Office européen des brevets

(19)

(11) Veröffentlichungsnummer: **0 303 117 B1**

# EUROPÄISCHE PATENTSCHRIFT

(12)

(45) Veröffentlichungstag der Patentschrift:
28.08.91 Patentblatt 91/35

(51) Int. Cl.⁵: **B65G 33/02**, B23Q 7/14

(21) Anmeldenummer: **88112288.1**

(22) Anmeldetag: **29.07.88**

(54) Vorrichtung zum Transport von Werkstückträgern.

(30) Priorität: **12.08.87 DE 3726769**

(43) Veröffentlichungstag der Anmeldung:
**15.02.89 Patentblatt 89/07**

(45) Bekanntmachung des Hinweises auf die
Patenterteilung:
**28.08.91 Patentblatt 91/35**

(84) Benannte Vertragsstaaten:
**AT BE CH DE ES FR GB GR IT LI LU NL SE**

(56) Entgegenhaltungen:
**DE-A- 3 148 194
DE-C- 3 224 330
FR-A- 2 568 230
US-A- 4 567 919**

(73) Patentinhaber: **Grob-Werke GmbH & Co. KG
Industriestrasse 9
W-8948 Mindelheim (DE)**

(72) Erfinder: **Kirschner, Günter
Franz-Wunner-Strasse 6
W-8948 Mindelheim (DE)**

(74) Vertreter: **Pfister, Helmut, Dipl.-Ing.
Buxacher Strasse 9
W-8940 Memmingen/Bayern (DE)**

**Beschreibung**

Die Erfindung betrifft eine Vorrichtung zum Transport von Werkstückträgern zu Bearbeitungsstationen mit einer an einem Gestell gelagerten Rollenbahn oder dergleichen und einer zylindrischen Transportspindel, deren Achse sich in Förderrichtung erstreckt und die an ihrem Umfang eine schraubenlinienförmige Transportnut mit einem Rastabschnitt aufweist, wobei in die Nut ein Mitnehmerelement des Werkstückträgers hineinragt und die Transportspindel an den Enden eine Lagerung aufweist.

Zur Verkettung von Maschinen- oder Arbeitsstationen sind Transportvorrichtungen bekannt, die die Werkstückträger nacheinander zu den einzelnen Bearbeitungsstationen transportieren. Dabei ist es wichtig, die Transportvorrichtung derart auszubilden, daß die Werkstückträger an den einzelnen Bearbeitungsstationen exakt positioniert werden können.

Durch die DE-A-2845978 oder auch durch die DE-C-3224330 sind derartige Transportvorrichtungen bekannt geworden, die im wesentlichen aus einer an einem Gestell gelagerten Rollenbahn oder dergleichen bestehen, die die Werkstückträger unterstützen sowie einer zylindrischen Transportspindel, deren Achse sich in Förderrichtung erstreckt. Die Transportspindel besitzt an ihrem Umfang eine schraubenlinienförmige Transportnut, in die ein Mitnehmerelement des Werkstückträgers hineinragt.

Um die Werkstückträger an einer vorbestimmten Stellung positionieren zu können, besitzt die Transportnut einen Rastabschnitt ohne Steigung. Durch diesen Rastabschnitt wird der Werkstückträger an einer genau vorbestimmten Stelle angehalten. Die Transportspindel kann für den Bearbeitungsvorgang stillgesetzt werden, es sei denn, der Bearbeitungsvorgang ist kurz genug, so daß die Verweildauer des Mitnehmerelements im Rastabschnitt ausreicht.

In der Regel werden eine größere Zahl von Bearbeitungsstationen hintereinander angeordnet, und jeder Bearbeitungsstation ist eine Transportspindel zugeordnet. Dabei empfiehlt es sich häufig, mehr Bearbeitungsstationen vorzusehen, auch wenn diese nicht sofort oder nicht alle benötigt werden. Dadurch wird es möglich, die ganze Bearbeitungsstraße später zu erweitern. Auch kann leicht eine Umstellung vorgenommen werden, wenn andere Werkstücke bearbeitet werden sollen. Auch der Einsatz von Reservemaschinen wird erleichtert.

In den Fällen, in denen eine Bearbeitungsstation außer Betrieb ist, beispielsweise weil die Werkzeugmaschine gewartet werden soll oder weil die betreffende Station bei dem gegebenen Arbeitsprogramm nicht benötigt wird, erweist es sich als sehr nachteilig, wenn die Transportspindel die palettenartigen Werkstückträger in Arbeitsposition bringt, dort fixiert und erst nach einer Verzögerung wieder weitertransportiert. Das Anhalten der Werkstückträger stört den Arbeitsfluß und verlängert die Durchlaufzeit.

Aus der FR-A-2568230 ist eine Vorrichtung ähnlicher Art bekannt, bei der die Transportspindel an Stelle einer Rastnut einen Abschnitt aufweist, der durch einen Verstellmechanismus im Inneren der Transportspindel derartig rechtwinklig zur Achse verstellt werden kann, daß das Mitnahmeelement außer Eingriff mit der Transportspindel kommt. Hierdurch kann ein Werkstückträger oder dergleichen trotz weiterlaufender Transportspindel angehalten und durch eine umgekehrte Betätigung des Verstellmechanismus auch wieder weitergefördert werden.

Die exzentrische Verstellung eines derartigen Abschnittes der Transportspindel ist nur eine Variante zur Anordnung einer Rastnut mit der Möglichkeit die Rastnut außer Betrieb zu setzen. Auf diese Weise läßt sich zwar eine Stockung im Arbeitsfluß verhindern. Die aufwendige Transportspindel dient jedoch auch dann als Fördermittel, wenn sie im Grunde nicht gebraucht wird und wenn die Förderung der Werkstückträger auf anderem Wege erfolgt. Insbesondere bleibt durch das Problem, daß die Transportspindel den Vorschub bestimmt, auch wenn die Ausnützung von Stauraum wünschenswert wäre.

Es ist Aufgabe der Erfindung, eine Vorrichtung der eingangs beschriebenen Gattung derart auszugestalten, daß nicht benötigte Bearbeitungsstationen von den Werkstückträgern ohne Halt passiert werden können und die nicht benötigten Bearbeitungsstationen und die zugehörigen Transportspindeln ohne Einfluß auf den Transport der Werkstückträger bleiben.

Zur Lösung dieser Aufgabe wird von einer Vorrichtung der eingangs angegebenen Gattung ausgegangen. Erfindungsgemäß wird vorgeschlagen, daß die gesamte Transportspindel mit der Lagerung um eine Schwenkachse verschwenkbar ist, um das Mitnehmerelement außer Eingriff mit der Transportnut zu bringen. Bei einer Variante zur Erfindung ist vorgesehen, daß die gesamte Transportspindel mit der Lagerung sich über einen verstellbaren Keil auf dem Maschinengestell abstützt, um durch die Keilverstellung ebenfalls das Mitnehmerelement außer Eingriff mit der Transportnut zu bringen.

Die Erfindung erreicht, daß bei einfacher betriebsicherer Bauweise durch eine einfache Verstellung der Transportspindel die Transportspindel außer Funktion gesetzt wird, so daß der Weitertransport durch die sonstigen, auf die Werkstückträger einwirkenden Vorschubkräfte erfolgt. Dabei bewegen sich die Werkstückträger auf der Rollenbahn oder dergleichen. Die Inbetriebnahme der Transportspindel ist durch einfache Umstellung möglich, so daß eine stillgelegte Bearbeitungsstation ohne Rüstzeit in Betrieb genommen werden kann.

EP 0 303 117 B1

Die abhängigen Unteransprüche kennzeichnen vorteilhafte Ausgestaltungen der Erfindung.

In der Zeichnung sind eingige Ausführungsbeispiele der Erfindung schematisch dargestellt. Es zeigen :

Fig. 1    eine Seitenansicht, teilweise im Schnitt, entsprechend der Schnittlinie I-I der Fig. 2 einer erfindungsgemäßen Transportvorrichtung,

Fig. 2    eine Draufsicht auf die Darstellung der Fig. 1 und

Fig. 3    einen Schnitt entsprechend der Schnittlinie III-III der Fig. 1,

Fig. 4    eine teilweise Ansicht einer abgewandelten Ausführungsform der Erfindung,

Fig. 5    einen Schnitt durch die Darstellung der Fig. 4 entsprechend der Schnittlinie V-V,

Fig. 6    eine teilweise Ansicht einer weiteren Ausführungsform der Erfindung,

Fig. 7    einen Schnitt durch die Darstellung der Fig. 6 entsprechend der Schnittlinie VII, und

Fig. 8    eine Teilansicht einer weiteren abgewandelten Ausführungsform der Erfindung.

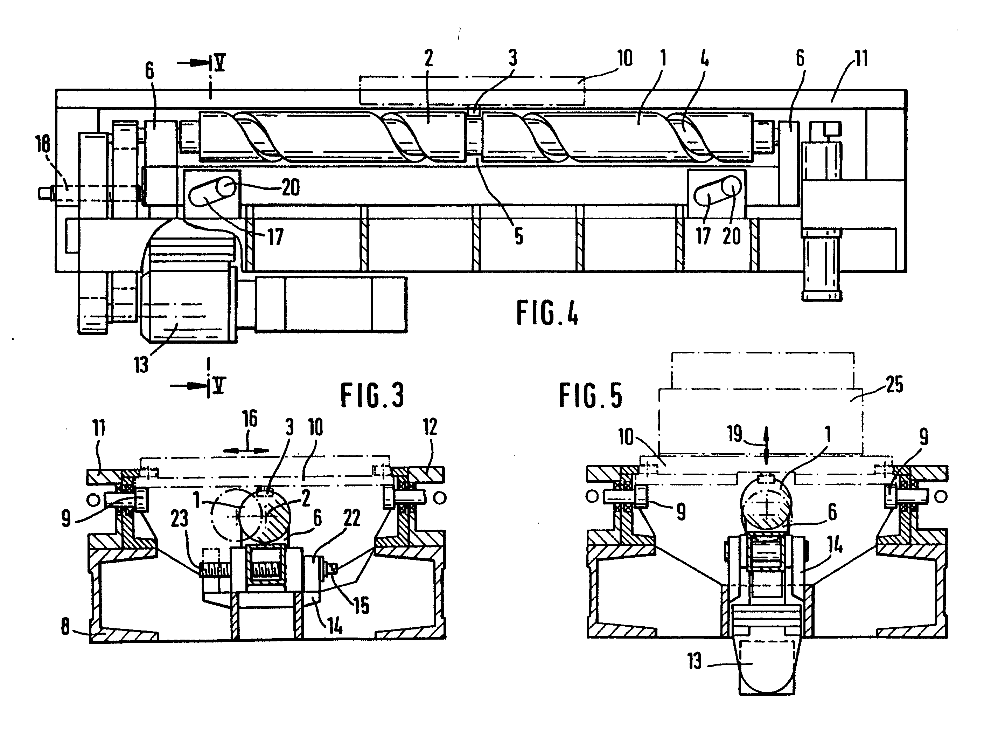

Das Gestell 8 trägt eine Rollenbahn, deren Rollen mit 9 bezeichnet sind. Diese Rollen stützen den Werkstückträger ab, der bei seinem Transport noch mit den seitlichen Begrenzungen 11 und 12 zusammenwirkt. Der Werkstückträger ist in den Fig. 3, 5 und 7 jeweils mit strichpunktierten Linien angedeutet.

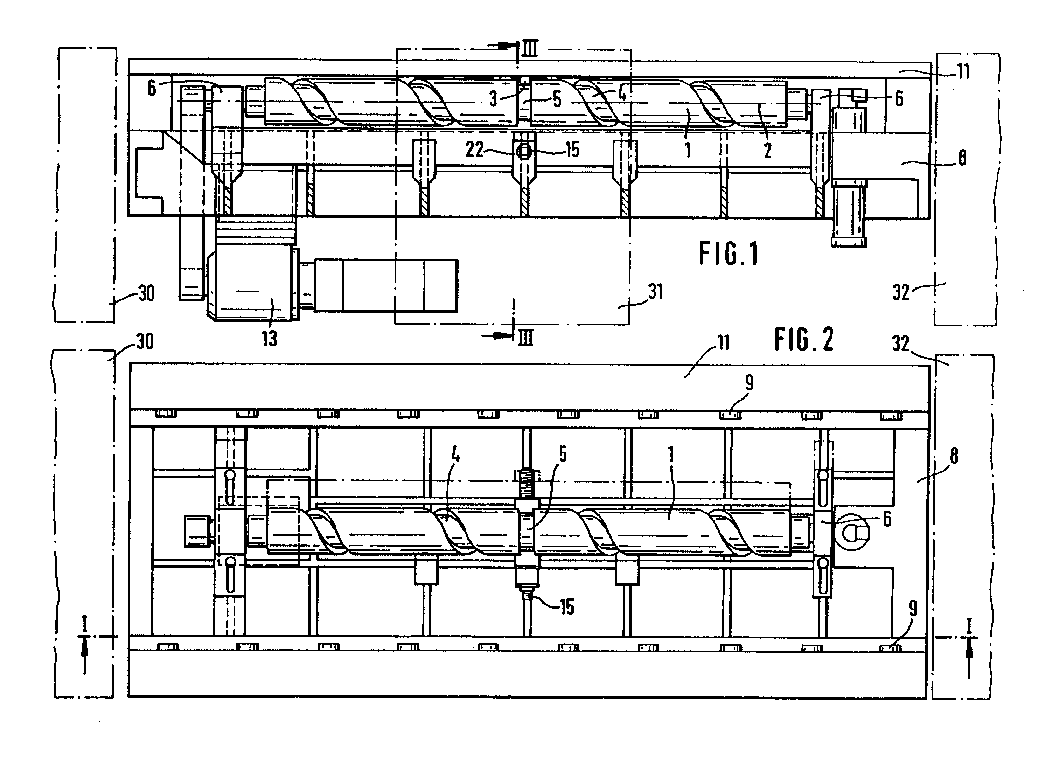

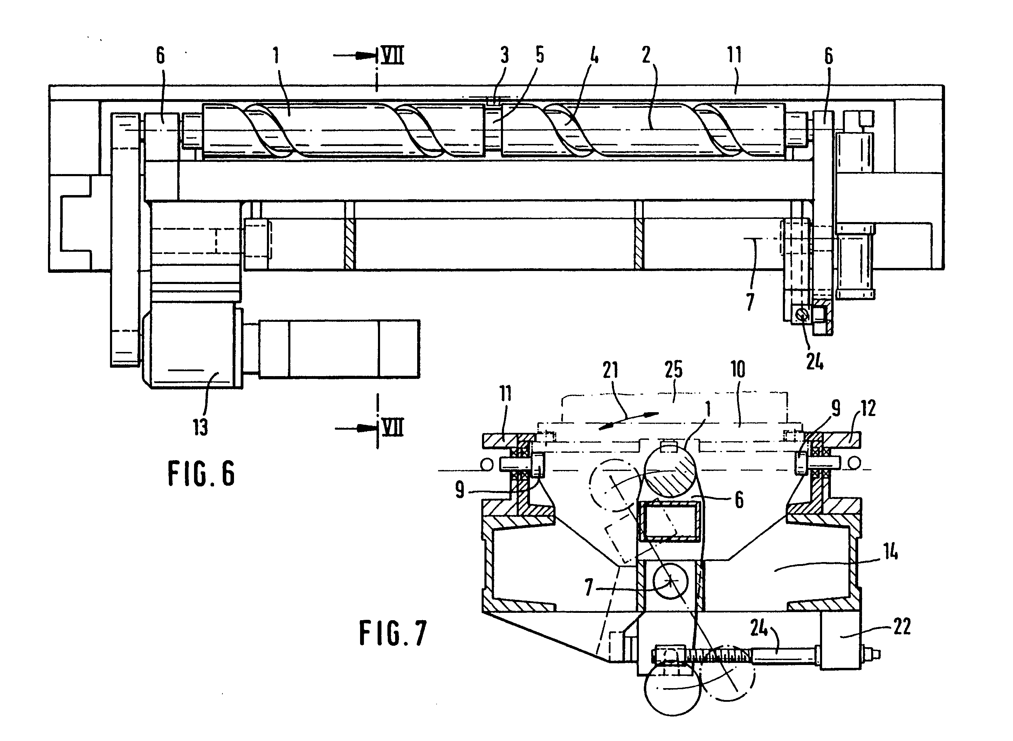

Auf dem Werkstückträger 10 liegen die Werkstücke 25 (vgl. Fig. 5). Die Transportvorrichtung fördert Werkstücke 25 von der einen Bearbeitungsstation 30 zur nächsten Bearbeitungsstation 32. Wenn gewünscht, kann das Werkstück an der Bearbeitungsstation 31 (vgl. Fig. 1) angehalten werden.

Unter dem Werkstückträger 10 ist die Transportspindel 1 angeordnet, die um die Achse 2 verdrehbar ist. Der Antrieb der Spindel 2 erfolgt mittels des Motors 13.

Die Transportspindel 1 besitzt an ihrem Umfang eine schraubenlinienförmige Transportnut 4 sowie einen Rastabschnitt 5, der in die schraubenlinienförmige Nut 4 eingefügt ist. In die Nut 4 bzw. 5 greift das Mitnehmerlement 3 (Fig. 3) ein, das am Werkstückträger 10 angeordnet ist und nach unten ragt. Mittels der Rastnut 5 kann die Bewegung des Werkstückträgers 10 angehalten werden.

Die Transportspindel 1 ist mit ihren Enden in der U-förmigen Lagerung 6 gehalten, die innerhalb des Gestells 8 angeordnet ist und mit der auch der Motor 13 verbunden ist. Diese Lagerung 6 wird von dem Träger 14 getragen.

Der Träger 14 besitzt in dem Bereich, der sich etwa unter der Nut 5 befindet, einen Lagerbock 22, in dem eine Verstellspindel 15 drehbar gelagert ist. Das Gewinde 23 dieser Verstellspindel 15 greift in ein Innengewinde der Lagerung 6 ein. Wenn nun die Verstellspindel 15 gedreht wird, beispielsweise durch ein aufgestecktes Werkzeug, einen Schlüssel oder dergleichen, verschiebt das Gewinde 23 der Verstellspindel die Lagerung 6 in Richtung des Doppelpfeiles 16, wobei sich die Verstellspindel 15 in Achsrichtung im Lagerbock 22 abstützt. Auf diese Weise wird auch die Transportspindel 1 seitlich verstellt und kommt außer den Eingriffsbereich des Mitnehmerelements 3.

Es ist klar, daß durch eine Drehung in umgekehrter Drehrichtung der Spindel 15 die Transportspindel 1 wieder in Eingriffstellung gebracht werden kann.

Beim Ausführungsbeispiel nach den Fig. 4 und 5 ist die Lagerung 6 mittels der Bolzen 20 an dem entsprechenden Träger 14 gelagert. Bei diesem Ausführungsbeispiel befindet sich die Verstellspindel 18 im Bereich des Endes des Maschinengestells, und mittels dieser Verstellspindel 18 kann ähnlich wie mittels der Verstellspindel 15 die Lagerung 6 verschoben werden. Die Verschiebung erfolgt dabei teilweise in der Transportrichtung, die durch die Transportrollen 9 bestimmt ist. Wegen der geneigt angeordneten Langlöcher 17 bewegen sich aber die Bolzen 20 auf einer geneigten Bahn, so daß sich für die Transportspindel 1 nicht nur eine Längsbewegung in Richtung der Achse der Transportspindel ergibt, sondern auch eine Hubund Senkbewegung in Richtung des Doppelpfeiles 19, so daß auch auf diese Weise die Transportspindel 1 außer Eingriff mit dem Mitnehmerelement gebracht werden kann. Die Lagerung 6 kann mittels der Transportspindel 18 auch wieder angehoben werden, um das Zusammenwirken der Transportspindel 1 mit dem Mitnehmerelement 3 herbeizuführen.

Beim Ausführungsbeispiel der Fig. 6 und 7 ist die Lagerung 6 der Transportspindel 1 um die Achse 7 des Trägers 14 verschwenkbar. Die Achse 7 verläuft parallel zur Spindelachse 2, liegt aber unterhalb der Spindelachse. Der Antrieb der Lagerung 6 erfolgt mittels der Verstellspindel 24, wobei sich die Verstellspindel 24 am Lagerbock 22 des Gestells 8 abstützt und unterhalb der Achse 7 an der Lagerung 6 angreift. Auf diese Weise läßt sich eine Bewegung der Lagerung 6 in Richtung des Doppelpfeiles 21 erhalten, um die Transportspindel 1 außer Eingriff bzw. wieder in Eingriff mit dem Mitnehmerelement 3 zu bringen.

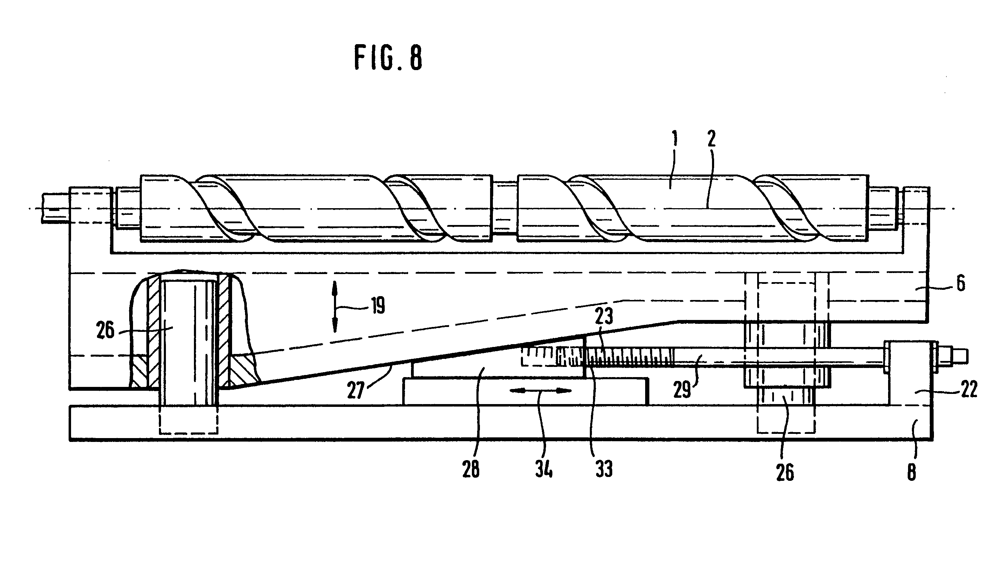

Beim Ausführungsbeispiel nach der Fig. 8 ist die Lagerung 6 der Transportspindel 1 an den Säulen 26 geführt. Diese Säulen sind im Maschinengestell 8 gelagert und erstrecken sich rechtwinklig zur Spindelachse 2.

Die Unterseite der Lagerung 6 ist mit einer Keilfläche 27 versehen und stützt sich über den Keil 28 auf dem

3

Maschinengestell 8 ab. An dem Maschinengestell ist ein Lagerbock 22 vorgesehen, in dem eine Verstellspindel 29 gelagert ist, die mit ihrem Ende 33, das das Außengewinde 23 trägt, in ein entsprechendes Innengewinde des Keiles 28 eingreift.

Wenn die Verstellspindel 29 verdreht wird, wird der Keil in Richtung des Doppelpfeiles 34 hin- oder hergezogen, und es ist klar, daß sich bei dieser Bewegung die Lagerung 6 anhebt oder absenkt, und zwar in Richtung des Doppelpfeiles 19, so daß die Transportspindel 1 in Eingriff bzw. außer Eingriff mit dem Mitnehmerelement 3 kommt.

## Patentansprüche

1. Vorrichtung zum Transport von Werkstückträgern (10) zu Bearbeitungsstationen mit einer an einem Gestell (8) gelagerten Rollenbahn oder dergleichen und einer zylindrischen Transportspindel (1), deren Achse (2) sich in Förderrichtung erstreckt und die an ihrem Umfang eine schraubenlinienförmige Transportnut (4) mit einem Rastabschnitt (5) aufweist, wobei in die Nut (4) ein Mitnahmerelement (3) des Werkstückträgers (10) hineinragt und die Transportspindel (1) an ihren Enden eine Lagerung (6) aufweist, dadurch gekennzeichnet, daß die gesamte Transportspindel (1) mit der Lagerung (6) um eine Schwenkachse (7) verschwenkbar ist, um das Mitnehmerelement (3) außer Eingriff mit der Transportnut (4, 5) zu bringen.

2. Vorrichtung zum Transport von Werkstückträgern (10) zu Bearbeitungsstationen mit einer an einem Gestell (8) gelagerten Rollenbahn oder dergleichen und einer zylindrischen Transportspindel (1), deren Achse (2) sich in Förderrichtung erstreckt und die an ihrem Umfang eine schraubenlinienförmige Transportnut (4) mit einem Rastabschnitt (5) aufweist, wobei in die Nut (4) ein Mitnehmerelement (3) des Werkstückträgers (10) hineinragt und die Transportspindel (1) an ihren Enden eine Lagerung (6) aufweist, dadurch gekennzeichnet, daß die gesamte Transportspindel (1) mit der Lagerung (6) sich über einen verstellbaren Keil (28) auf dem Maschinengestell (8) abstützt, um durch die Keilverstellung das Mitnehmerelement (3) außer Eingriff mit der Transportnut (4, 5) zu bringen.

3. Vorrichtung nach Anspruch 1, dadurch gekennzeichnet, daß die Schwenkachse (7) unterhalb der Spindelachse (2) angeordnet ist.

4. Vorrichtung nach Anspruch 2, dadurch gekennzeichnet, daß der Keil (28) in Richtung der Spindelachse (2) verschiebbar ist, wobei sich die Lagerung (6) rechtwinklig zur Spindelachse (2) bewegt.

5. Vorrichtung nach Anspruch 4, dadurch gekennzeichnet, daß die Lagerung (6) an Säulen (26) geführt ist, die am Maschinengestell (8) gehalten sind.

6. Vorrichtung nach einem der Ansprüche 1 bis 5, dadurch gekennzeichnet, daß die Lagerung (6) der Transportspindel (1) in einem Träger (14) gehalten ist und gegenüber dem Träger mittels einer Verstellspindel (15, 18, 24) verstellbar ist.

7. Vorrichtung nach einem der Ansprüche 2,4 oder 5, dadurch gekennzeichnet, daß der Keil (28) mittels einer Verstellspindel (29) verstellbar ist.

## Claims

1. Device for transporting workpiece carriers (10) to machining stations, said device having a roller conveyor or the like mounted on a frame (8), and a cylindrical transporting spindle (1) the axis of which (2) extends in the direction of conveyance and which has, on its periphery, a helical transporting groove (4) with a catch section thereto (5), said workpiece carrier (10) having a driving element (3) protruding into said groove (4) and said transporting spindle (1) having at the ends thereof a bearing arrangement (6) characterized in that the entire transporting spindle (1) with the bearing arrangement thereto (6) is capable of pivoting about a pivot axis (7) so that the driving element (3) is disengaged from the transporting groove (4, 5).

2. Device for transporting workpiece carriers (10) to machining stations, said device having a roller conveyor or the like mounted on a frame (8), and a cylindrical transporting spindle (1) the axis of which (2) extends in the direction of conveyance and which has, on its periphery, a helical transporting groove (4) with a catch section thereto (5), said workpiece carrier (10) having a driving element (3) protruding into said groove (4) and said transporting spindle (1) having at the ends thereof a bearing arrangement (6) characterized in that the entire transporting spindle (1) with the bearing arrangement thereto (6) is supported on the machine frame (8) via an adjustable wedge (28) in order to disengage the driving element (3) from the transporting groove (4, 5) by adjustment of the wedge.

3. Device according to claim 1 characterized in that the pivot axis (7) is arranged beneath the spindle axis (2).

4. Device according to claim 2 characterized in that the wedge (28) is capable of being moved in the direction of the spindle axis (2) whereby the bearing arrangement (6) moves at right angles to the spindle axis (2).

5. Device according to claim 4 characterized in that the bearing arrangement (6) is guided on columns (26) mounted on the machine frame (8).

6. Device according to one of the claims 1 to 5 characterized in that the bearing arrangement (6) of said transporting spindle (1) is held in a support (14) and is adjustable relative to the support by means of an adjusting spindle (15, 18, 24).

7. Device according to claims 2, 4 or 5 characterized in that the wedge (28) is adjustable by means of an adjusting spindle (29).

## Revendications

1. Dispositif pour le transport de porte-pièces (10) vers des stations d'usinage comprenant un transporteur à rouleaux ou analogue monté sur un bâti (8) et une broche de transport cylindrique (1) dont l'axe (2) s'étend dans la direction de transport et qui présente sur sa circonférence une rainure de transport (4) de forme hélicoïdale avec une section d'arrêt (5) un élément d'entraînement (3) du porte-pièce (10) dépassant dans la rainure (4) et la broche de transport (1) étant munie à ses extrémités d'un palier (6) **caractérisé en ce** que l'ensemble de la broche de transport (1) avec le palier (6) peut tourner autour d'un axe de pivotement (7) pour dégager l'élément d'entraînement (3) de la rainure de transport (4, 5).

2. Dispositif pour le transport de porte-pièces (10) vers des stations d'usinage, comprenant un transporteur à rouleaux ou analogue monté sur un bâti (8) et une broche de transport cylindrique (1) dont l'axe (2) s'étend dans la direction de transport et qui présente sur sa circonférence une rainure de transport (4) de forme hélicoïdale avec une section d'arrêt (5), un élément d'entraînement (3) du porte-pièce (10) dépassant dans la rainure (4) et la broche de transport (1) étant munie à ses extrémités d'un palier (6), **caractérisé en ce** que l'ensemble de la broche de transport (1) avec le palier (6) prend appui sur le bâti de machine (8) par l'intermédiaire d'une clavette (28) réglable pour dégager l'élément d'entraînement (3) de la rainure de transport (4, 5).

3. Dispositif selon la revendication 1, caractérisé en ce que l'axe de pivotement (7) est disposé au-dessous de l'axe (2) de la broche.

4. Dispositif selon la revendication 2, caractérisé en ce que la clavette (28) est déplaçable dans le sens de l'axe (2) de la broche, le palier (6) se déplaçant orthogonalement à l'axe (2) de la broche.

5. Dispositif selon la revendication 4, caractérisé en ce que le palier (6) est guidé sur des colonnes (26) maintenues sur le bâti de machine (8).

6. Dispositif selon l'une des revendications 1 à 5, caractérisé en ce que le palier (6) de la broche de transport (1) est maintenu dans un support (14) et déplaçable par rapport audit support au moyen d'une broche de réglage (15, 18, 24).

7. Dispositif selon l'une des revendications 2, 4 ou 5, caractérisé en ce que la clavette (28) est déplaçable au moyen d'une broche de réglage (29).

FIG.1

FIG.2

EP 0 303 117 B1

FIG.4

FIG.3

FIG.5

EP 0 303 117 B1

FIG. 6

FIG. 7

EP 0 303 117 B1

# FIG. 8

EP 0 303 117 B1